# EUROPEAN PATENT SPECIFICATION

(11) **EP 2 618 419 B1**
(45) Date of publication and mention of the grant of the patent: **26.11.2014**
(21) Application number: 11746869.4
(22) Date of filing: 18.04.2011
(51) Int. Cl.: H02J 7/00, H01M 2/34, H01M 10/052, H01M 10/42

(54) **OVER-CURRENT PROTECTION METHOD FOR LITHIUM BATTERY AND DEVICE THEREOF**
ÜBERSTROMSCHUTZVERFAHREN FÜR EINE LITHIUMBATTERIE UND VORRICHTUNG DAFÜR
PROCÉDÉ ET DISPOSITIF DE PROTECTION CONTRE LES SURINTENSITÉS D'UNE BATTERIE AU LITHIUM

(43) Date of publication of application: 24.07.2013
(73) Proprietor: Huawei Technologies Co., Ltd., Shenzhen, Guangdong 518129 (CN)
(72) Inventor: LIU, Xinyu, Shenzhen Guangdong 518129 (CN); SHUI, Wei, Shenzhen Guangdong 518129 (CN); LIU, Wei, Shenzhen Guangdong 518129 (CN); PENG, Shuang, Shenzhen Guangdong 518129 (CN)
(74) Representative: Körber, Martin Hans
(86) International application number: PCT/CN2011/072929
(87) International publication number: WO 2011/103827

(56) References cited:
- CN-A- 1 507 089
- CN-U- 201 565 924
- CN-Y- 200 944 526
- JP-A- 2000 023 345
- JP-A- 2010 131 749
- JP-A- 2010 131 749
- TW-B- 411 646
- US-A1- 2002 172 857
- US-A1- 2008 048 620
- US-A1- 2009 202 890
- US-A1- 2011 012 564
- US-B1- 6 208 117

## Description

### FIELD OF THE INVENTION

The present invention relates to the field of lithium battery application technologies, and in particular, to an over-current protection method and device for a lithium battery.

### BACKGROUND OF THE INVENTION

At present, a lithium battery has high energy density, a high voltage of a single cell, a long life-span, no memory effect, and no pollution, and therefore, it is a battery application development trend to adopt the lithium battery for power supply. An application of a lithium battery depends on a battery management system (Battery Management System, BMS), and the BMS needs to perform voltage sampling, temperature sampling, and current sampling on a single cell voltage, so as to determine over-voltage, under-voltage, charging over-current, discharging over-current, high temperature abnormality, and low temperature abnormality, and monitor and manage the lithium battery according to these determining results.

However, a working current of a lithium battery that serves as a power battery is high. To implement bi-directional detection and protection of a current during charging/discharging, it is required that detection accuracy is high, a protection action is fast, a protection state can be maintained after a main circuit is cut off during over-current, whether the protection action is released is controllable, and hardware can implement independent protection in the case that software fails, so as to ensure a safe and reliable application. However, a current detection and protection scheme of a BMS of a power battery in the current market is not mature, and the reliability is low.

US20110012564A1 discloses a DC power tool having an interiorly provided lithium battery element and a charging switch includes a safety protection module to eliminate the risk of circuitry bum-out and other dangers resulting from connecting the power tool to a power supply with unmatched rated voltage and rated current when charging the power tool via use of an adapter. Said safety protection module further comprises a locking device in charge of protecting the DC power tool when a charging overcurrent is detected. The safety locking activated by the locking device can be released by removing the adapter.

### SUMMARY OF THE INVENTION

Embodiments of the present invention provide an over-current protection method and device for a lithium battery, where the method and device have high reliability.

An embodiment of the present invention provides an over-current protection device for a lithium battery, where the device includes:
a detection unit, configured to perform bi-directional detection on a charging/discharging current of the lithium battery, so as to obtain a detection signal; and
a determining unit, configured to complete determination of charging/discharging over-current of the lithium battery according to the detection signal, and output the charging/discharging over-current signal to a locking unit; wherein the locking unit is configured to lock an over-current state of a lithium battery according to a charging/discharging over-current signal of the lithium battery, so as to continuously indicate that the lithium battery is in the over-current state until an unlocking signal is received; and
a circuit cut-off unit, configured to, after the locking unit locks the over-current state of the lithium battery, output a drive signal to cut off a main circuit where the lithium battery is located;
a central processing unit, configured to determine whether the locking unit in the over-current locked state needs to be unlocked, and if unlocking is needed, output an unlocking signal to the locking unit, so that the locking unit unlocks the over-current locked state and outputs a drive signal to start the main circuit; and
an identification signal outputting unit, configured to output, to a central processing unit, an identification signal that represents whether the locking unit has entered an over-current locked state.

An embodiment of the present invention further provides an over-current protection method for a lithium battery, where the method includes:
performing bi-directional detection on a charging/discharging current of the lithium battery, so as to obtain a detection signal; and
completing determination of charging/discharging over-current of the lithium battery according to the detection signal, and outputting a charging/discharging over-current signal
receiving the charging/discharging over-current signal of a lithium battery;
locking an over-current state of the lithium battery according to the charging/discharging over-current signal of the lithium battery, so as to continuously indicate that the lithium battery is continuously in the over-current state until an unlocking signal is received;
outputting a drive signal to cut off a main circuit where the lithium battery is located;
wherein at the same time of the outputting the drive signal to cut off the main circuit where the lithium battery is located, the method further comprises
outputting, to a central processing unit, an identification signal that represents whether an over-current locked state has been entered; and
the method further comprises: determining whether an unlocking signal sent by the central processing unit is received, if the unlocking signal sent by the central processing unit is received, unlocking the over-current state according to the unlocking signal and outputting the drive signal to start the main circuit; and if the unlocking signal sent by the central processing unit is not received, continuously keeping outputting the drive signal for cutting off the main circuit and the identification signal.

In the embodiments of the present invention, a locking unit locks an over-current state of a lithium battery, and the cutting-off of a switch of a main circuit is driven by using the locking unit and a circuit cut-off unit, so that execution of an over-current protection action for the lithium battery no longer depends on a CPU, and even if a CPU software fails, an over-current protection state may still be entered when an over-current state occurs, or original over-current state protection may still be effectively maintained.

### BRIEF DESCRIPTION OF THE DRAWINGS

To describe the technical solutions in the embodiments of the present invention more clearly, the accompanying drawings required for describing the embodiments are briefly introduced in the following. Apparently, the accompanying drawings in the following description show merely some embodiments of the present invention, and persons of ordinary skill in the art may still derive other drawings from these accompanying drawings without creative efforts.
FIG. 1 is a schematic structural diagram of an over-current protection device for a lithium battery according to an embodiment of the present invention;
FIG. 2 is a schematic structural diagram of another over-current protection device for a lithium battery according to an embodiment of the present invention;
FIG. 3 is a schematic structural diagram of another over-current protection device for a lithium battery according to an embodiment of the present invention;
FIG. 4 is a schematic structural diagram of a central processing unit according to an embodiment of the present invention;
FIG. 5 is a schematic flow chart of an over-current protection method for a lithium battery according to an embodiment of the present invention; and
FIG. 6 is a schematic flow chart of another over-current protection method for a lithium battery according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

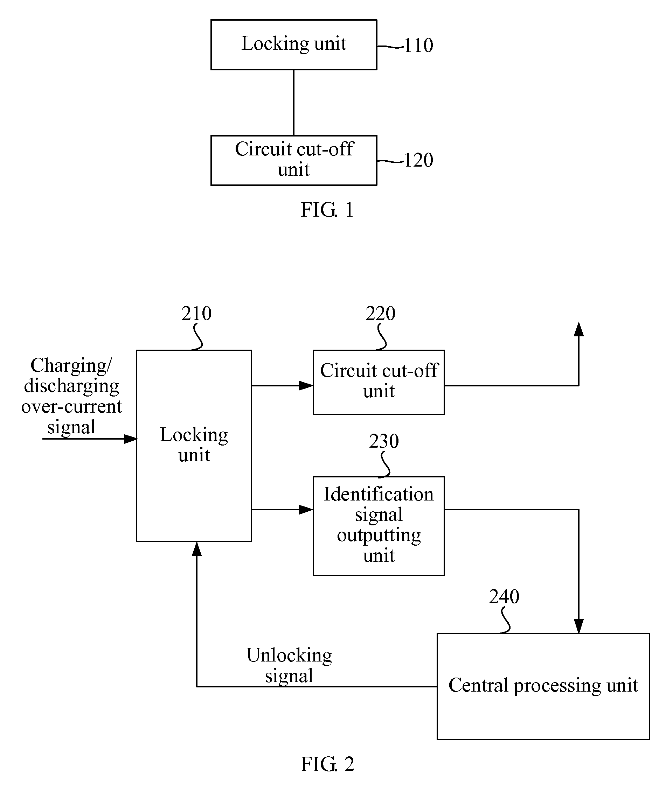

FIG. 1 is a schematic structural diagram of an over-current protection device for a lithium battery according to an embodiment of the present invention, where the device includes a locking unit 110 and a circuit cut-off unit 120.

The locking unit 110 is configured to lock an over-current state of a lithium battery according to a charging/discharging over-current signal of the lithium battery, so as to continuously indicate that the lithium battery is in the over-current state. After receiving the charging/discharging over-current signal of the lithium battery, the locking unit 110 considers that the lithium battery has already been in the over-current state, and the "lock an over-current state of the lithium battery" herein means that after receiving the charging/discharging over-current signal of the lithium battery, the locking unit 110 always considers that the lithium battery is in the over-current state, even if the lithium battery has returned to normal in a certain period of time. The over-current state herein includes a charging over-current state and a discharging over-current state.

As an embodiment of the present invention, the locking unit 110 may implement locking of the over-current state through the following manner: Memory retention is performed on the charging/discharging over-current signal, and once a charging/discharging over-current state occurs, the locking unit 110 keeps outputting a drive signal for cutting off a main circuit. For example, a signal in the locking unit 110 is a low level, where the signal represents the over-current state, and after receiving the charging/discharging over-current signal, the locking unit 110 may continuously output a low level, where the low level is used as the drive signal. The circuit cut-off unit 120 is configured to, after the locking unit 110 locks the over-current state of the lithium battery, output a drive signal to cut off a main circuit where the lithium battery is located. For example, the circuit cut-off unit 120 may drive a path switch of the main circuit through the drive signal, so as to implement the cutting-off of the main circuit.

In this embodiment of the present invention, a locking unit locks an over-current state of a lithium battery, and the cutting-off of a switch of a main circuit is driven by using the locking unit and a circuit cut-off unit, so that execution of an over-current protection action for the lithium battery no longer depends on a CPU, and even if a CPU software fails, an over-current protection state may still be entered when an over-current state occurs, or original over-current state protection may still be effectively maintained.

FIG. 2 is a schematic structural diagram of another over-current protection device for a lithium battery according to an embodiment of the present invention, where the device includes a locking unit 210, a circuit cut-off unit 220, an identification signal outputting unit 230, and a central processing unit 240.

The locking unit 210 is configured to lock an over-current state of a lithium battery according to a charging/discharging over-current signal of the lithium battery, so as to indicate that the lithium battery is continuously in the over-current state.

The circuit cut-off unit 220 is configured to, after the locking unit 210 locks the over-current state of the lithium battery, output a drive signal to cut off a main circuit where the lithium battery is located.

The identification signal outputting unit 230 is configured to output, to the central processing unit 240, an identification signal that is used to represent whether the locking unit 210 has entered an over-current locked state. That is, after the locking unit locks the over-current state of the lithium battery, the identification signal outputting unit 230 may output, to the central processing unit 240, an identification signal indicating that the locking unit 210 has already been in the over-current locked state; and after the locking unit 210 unlocks the over-current locked state, the identification signal outputting unit 230 may output, to the central processing unit 240, an identification signal indicating that the locking unit 210 is no longer in the over-current locked state.

The central processing unit 240 is configured to determine whether the locking unit 210 in the over-current locked state needs to be unlocked, and if unlocking is needed, output an unlocking signal to the locking unit 210, so that the locking unit 210 unlocks the over-current locked state and outputs a drive signal to start the main circuit. An operation of starting the main circuit herein may be completed by the locking unit 210, and may also be completed by one independent unit, for example, a circuit starting unit.

In this embodiment of the present invention, a locking unit locks an over-current state of a lithium battery, and the starting and cutting-off of a switch of a main circuit are driven by using the locking unit and a circuit cut-off unit, so that execution of an over-current protection action for the lithium battery no longer depends on a CPU, and even if a CPU software fails, an over-current protection state may still be entered when an over-current state occurs, or original over-current state protection may still be effectively maintained. In addition, in this embodiment of the present invention, the locking unit may further be unlocked by using the CPU, so that a lithium battery power supply system may be recovered for power supply in time when the over-current state disappears.

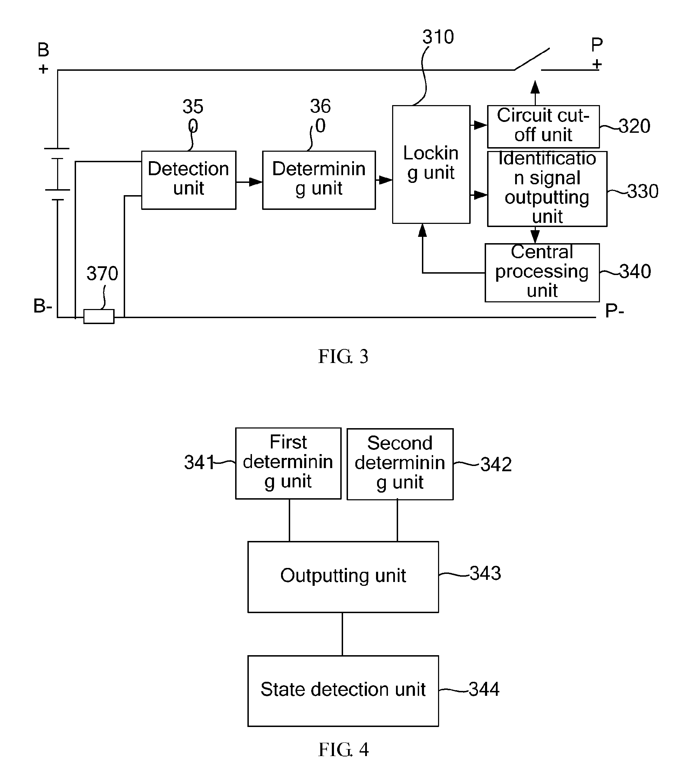

FIG. 3 is a schematic structural diagram of another over-current protection device for a lithium battery according to an embodiment of the present invention, where the device includes a locking unit 310, a circuit cut-off unit 320, an identification signal outputting unit 330, a central processing unit 340, a detection unit 350, a determining unit 360, and a conversion unit 370.

The detection unit 350 is configured to perform bi-directional detection on a charging/discharging current of a lithium battery, so as to obtain a detection signal. In this embodiment, the conversion unit 370 may be connected in series to a negative terminal of a main circuit where the lithium battery is located, and the detection unit 350 may be connected in parallel to two ends of the conversion unit 370. In this way, after the conversion unit 370 converts a current signal into a voltage signal, the voltage signal may be received by the detection unit 350, and then the detection unit 350 amplifies the voltage signal through an operational amplifier, so as to obtain the detection signal and transmit the detection signal to the determining unit 360. In this embodiment, the conversion unit 370 may be a sampling resistor, and may also be a current divider, a current sensor, or the like.

Definitely, the detection performed on the charging/discharging current signal by the detection unit 350 in this embodiment of the present invention is not limited to the foregoing manner, and other current detection manners used by persons skilled in the art should also fall within the scope of the present invention.

The determining unit 360 is configured to complete determination of charging/discharging over-current of the lithium battery according to the detection signal of the detection unit 350, and output a charging/discharging over-current signal to the locking unit 310.

As an embodiment of the present invention, the determining unit 360 may specifically compare, through a comparator, the detection signal with a reference voltage signal that represents charging/discharging over-current. When a voltage of the detection signal is higher than a first reference voltage, it is considered to be charging over-current, and when the voltage of the detection signal is smaller than a second reference voltage, it is considered to be discharging over-current, thereby outputting the charging/discharging over-current signal to the locking unit 310. Preferably, the first reference voltage is greater than the second reference voltage.

The locking unit 310 is configured to lock an over-current state according to the received charging/discharging over-current signal, so as to indicate that the lithium battery is continuously in the over-current state.

As an embodiment of the present invention, the locking unit 310 may also be connected to an interruption pin of the central processing unit 340. When over-current occurs, the locking unit 310 may send an interruption signal to the central processing unit 340, and when receiving the interruption signal, the central processing unit 340 may consider that the over-current has occurred to the lithium battery, and then the central processing unit 340 may also cut off the main circuit and send alarm information.

The circuit cut-off unit 320 is configured to, after the locking unit 310 locks the over-current state of the lithium battery, output a drive signal to cut off the main circuit where the lithium battery is located.

The identification signal outputting unit 330 is configured to output, to the central processing unit 340, an identification signal that represents whether the locking unit 310 has entered an over-current locked state.

The central processing unit 340 is configured to determine whether the locking unit 310 in the over-current locked state needs to be unlocked, and if unlocking is needed, output an unlocking signal to the locking unit 310, so that the locking unit 310 unlocks the over-current locked state and outputs a drive signal to start the main circuit.

As an embodiment of the present invention, and as shown in FIG. 4, the central processing unit 340 includes a first determining unit 341, a second determining unit 342, an outputting unit 343, and a state detection unit 344, where the first determining unit 341, the second determining unit 342, and the state detection unit 344 each are connected to the outputting unit 343.

The first determining unit 341 is configured to determine, by detecting states such as a voltage, temperature, and a current of each cell of a lithium battery, whether a lithium battery group is available.

The second determining unit 342 is configured to determine, by detecting a bus-bar voltage, whether an over-current state disappears.

The outputting unit 343 is configured to: when the over-current state disappears and the battery group is available, output a level signal as an unlocking signal to the locking unit 310 through an I/O interface.

The state detection unit 344 is configured to detect whether the central processing unit works normally, so as to determine whether the level signal output by the outputting unit 343 is correct. In this embodiment of the present invention, the outputting units 343 and the state detection unit 344 may be implemented through three I/O interfaces. For example, the third I/O interface outputs a high level as an unlocking signal. To ensure that the high level output by the third I/O interface is reliable, the first I/O interface may output a high level firstly, and then the second I/O interface detects whether the first I/O interface outputs the high level. If it is detected that the first I/O interface outputs the high level, it is proved that the central processing unit 340 works normally, and the high level output by the third I/O interface is reliable. Definitely, when it is verified whether the central processing unit 340 works normally, the first I/O interface may output a low level firstly, and then the second I/O interface detects whether the first I/O interface outputs the low level. If it is detected that the first I/O interface outputs the low level, it is proved that the central processing unit 340 works normally.

In this embodiment of the present invention, a locking unit locks an over-current state of a lithium battery, and the cutting-off of a switch of a main circuit is driven by using the locking unit and a circuit cut-off unit, so that execution of an over-current protection action for the lithium battery no longer depends on a CPU, and even if a CPU software fails, an over-current protection state may still be entered when an over-current state occurs, or original over-current state protection may still be effectively maintained. In addition, in this embodiment of the present invention, the locking unit may further be unlocked by using the CPU, so that a lithium battery power supply system may be recovered for power supply in time when the over-current state disappears. Furthermore, a redundancy backup method for preventing a faulty action of an I/O interface of a central processing unit is adopted in this embodiment of the present invention, so that the reliability of a product is greatly improved.

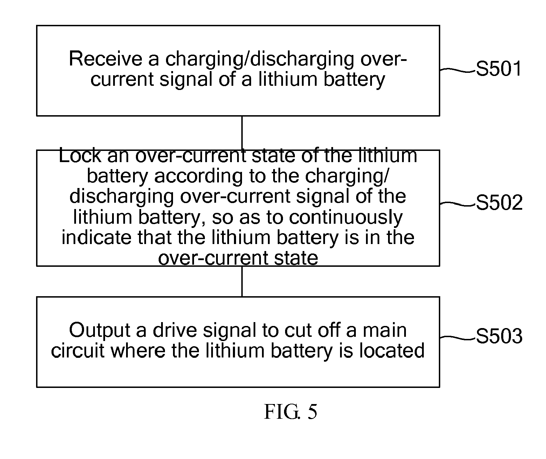

FIG. 5 is a schematic flow chart of an over-current protection method for a lithium battery according to an embodiment of the present invention, where the method includes the following steps.

S501: Receive a charging/discharging over-current signal of a lithium battery, where the over-current signal herein includes a charging over-current signal or a discharging over-current signal.

S502: Lock an over-current state of the lithium battery according to the charging/discharging over-current signal of the lithium battery, so as to indicate that the lithium battery is continuously in the over-current state.

The "lock an over-current state of the lithium battery" herein means that after the charging/discharging over-current signal of the lithium battery is received, it is always considered that the lithium battery is in the over-current state (even if the lithium battery has returned to normal in a certain period of time).

As an embodiment of the present invention, the locking of the over-current state may be implemented through the following manner: Memory retention is performed on the charging/discharging over-current signal, and once a charging/discharging over-current state occurs, a drive signal for cutting off a main circuit is kept being outputted. For example, a signal that represents the over-current state is a low level, and after the charging/discharging over-current signal is received by a locking unit, the locking unit may continuously output a low-level, where the low level is used as the drive signal.

S503: Output the drive signal to cut off a main circuit where the lithium battery is located. For example, the cutting-off of the main circuit may be implemented by the drive signal driving a path switch of the main circuit.

In this embodiment of the present invention, a locking unit locks an over-current state of a lithium battery, and the cutting-off of a switch of a main circuit is driven by using the locking unit and a circuit cut-off unit, so that execution of an over-current protection action for the lithium battery no longer depends on a CPU, and even if a CPU software fails, an over-current protection state may still be entered when an over-current state occurs, or original over-current state protection may still be effectively maintained.

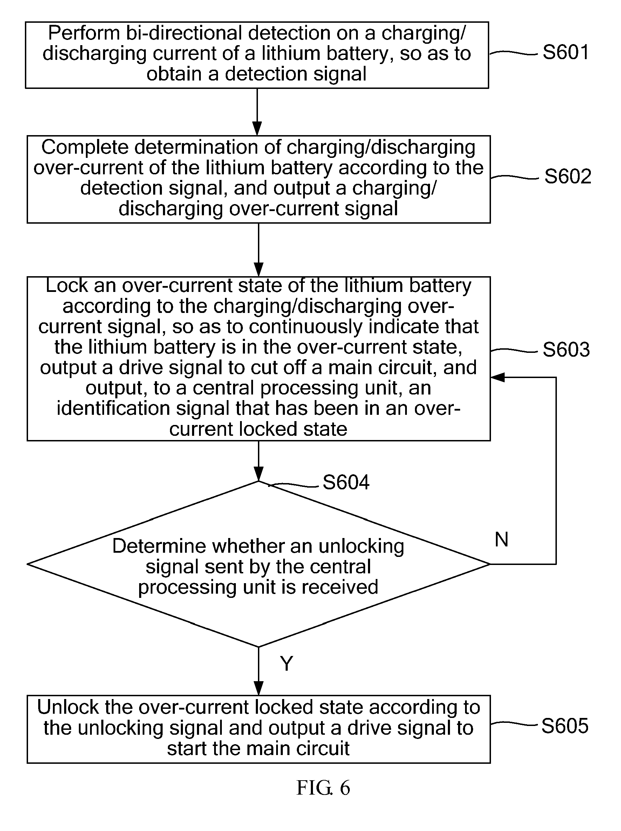

FIG. 6 is a schematic flow chart of another over-current protection method for a lithium battery according to an embodiment of the present invention, where the method includes the following steps.

S601: Perform bi-directional detection on a charging/discharging current of a lithium battery, so as to obtain a detection signal.

In this embodiment, a conversion unit may be connected in series to a negative terminal of a main circuit, and a detection unit is connected in parallel to two ends of the conversion unit. In this way, after the conversion unit converts a current signal into a voltage signal, the voltage signal may be received by the detection unit, and then the detection unit amplifies the voltage signal through an operational amplifier, so as to obtain the detection signal.

S602: Complete determination of charging/discharging over-current of the lithium battery according to the detection signal, and output a charging/discharging over-current signal. In this embodiment, the determination may be completed through a determining unit. The determining unit, for example, may compare, through a comparator, the detection signal with a reference voltage signal that represents charging/discharging over-current, so as to output the charging/discharging over-current signal to a locking unit.

S603: Lock an over-current state of the lithium battery according to the charging/discharging over-current signal, so as to continuously indicate that the lithium battery is in the over-current state, output a drive signal to cut off the main circuit, and output, to a central processing unit, an identification signal that has been in an over-current locked state.

S604: Determine whether an unlocking signal sent by the central processing unit is received, if the unlocking signal sent by the central processing unit is received, proceed to step S605; otherwise, go back to step S603 to continuously keep outputting a drive signal for cutting off the main circuit and an identification signal indicating that an over-current locked state has already been entered.

After receiving the identification signal, the central processing unit determines, according to the identification signal, whether to send an unlocking signal. Specifically, the determination may be performed through the following manner:
determining, by detecting a voltage, temperature, and a current of each cell, whether a lithium battery group state is available;
determining, by detecting a bus-bar voltage, whether the over-current state disappears; and
when the over-current state disappears and the battery group state is available,
outputting a level signal as the unlocking signal through an input/output I/O interface.

As an embodiment of the present invention, the central processing unit may also detect whether the central processing unit works normally, so as to determine whether the output unlocking signal is correct. The function may be implemented through three I/O interfaces. For example, an I/O interface 3 outputs a high level as an unlocking signal. To ensure that the high level output by the I/O interface 3 is reliable, an I/O interface 1 may output a high level firstly, and then an I/O interface 2 detects whether the I/O interface 1 outputs the high level. If it is detected the I/O interface 1 outputs the high level, it is proved that the central processing unit works normally, and the high level output by the I/O interface 3 is reliable. Definitely, when it is verified whether the central processing unit works normally, the I/O interface 1 may output a low level firstly, and then the I/O interface 2 detects whether the I/O interface 1 outputs the low level. If it is detected the I/O interface 1 outputs the low level, it is proved that the central processing unit works normally.

S605: Unlock the over-current locked state according to the unlocking signal and output a drive signal to start the main circuit.

In this embodiment of the present invention, an over-current state of a lithium battery is locked, and the cutting-off of a switch of a main circuit is driven according to a locking state, so that execution of an over-current protection action for the lithium battery no longer depends on a CPU, and even if a CPU software fails, an over-current protection state may still be entered when an over-current state occurs, or original over-current state protection may still be effectively maintained. In addition, in this embodiment of the present invention, a locking unit may further be unlocked by using the CPU, so that a lithium battery power supply system may be recovered for power supply in time when the over-current state disappears. Furthermore, a redundancy backup method for preventing a faulty action of an I/O interface of a central processing unit is adopted in this embodiment of the present invention, so that the reliability of a product is greatly improved.

Persons of ordinary skill in the art may understand that all or a part of the procedures of the methods in the foregoing embodiments may be implemented by a computer program instructing relevant hardware. The program may be stored in a computer readable storage medium. When the program is run, the procedures of the methods in the foregoing embodiments are performed. The storage medium may be a magnetic disk, an optical disk, a read-only memory (Read-Only Memory, ROM), a random access memory (Random Access Memory, RAM), or the like.

## Claims

1. An over-current protection device for a lithium battery, comprising:
a detection unit (350), configured to perform bi-directional detection on a charging/discharging current of the lithium battery, so as to obtain a detection signal; and
a determining unit (360), configured to complete determination of charging/discharging over-current of the lithium battery according to the detection signal, and output the charging/discharging over-current signal to a locking unit; wherein
the locking unit (110)- is configured to lock an over-current state of a lithium battery according to a charging/discharging over-current signal of the lithium battery, so as to continuously indicate that the lithium battery is in the over-current state until an unlocking signal is received; and
a circuit cut-off unit (120), configured to, after the locking unit locks the over-current state of the lithium battery, output a drive signal to cut off a main circuit where the lithium battery is located;
a central processing unit (240), configured to determine whether the locking unit in the over-current locked state needs to be unlocked, and if unlocking is needed, output an unlocking signal to the locking unit, so that the locking unit unlocks the over-current locked state and outputs a drive signal to start the main circuit; and
an identification signal outputting unit (230), configured to output, to a central processing unit, an identification signal that represents whether the locking unit has entered an over-current locked state.

2. The device according to claim 1, further comprising a conversion unit (370), wherein the conversion unit is connected in series to a negative terminal of the main circuit, and is configured to convert a current signal into a voltage signal, and the detection unit is configured to receive the voltage signal, and amplify the voltage signal through an operational amplifier, so as to obtain the detection signal.

3. The device according to claim 1, wherein the determining unit (360) is specifically configured to compare, through a comparator, the detection signal with a reference voltage signal that represents charging/discharging over-current, so as to output the charging/discharging over-current signal to the locking unit.

4. The device according to claim 1, wherein the central processing unit comprises:
a first determining unit (341), configured to determine, by detecting a voltage, temperature, and a current of each cell, whether a lithium battery group is available;
a second determining unit (342), configured to determine, by detecting a bus-bar voltage, whether the over-current state disappears; and
an outputting unit (343), configured to: when the second determining unit determines that the over-current state disappears and the first determining unit determines that the battery group is available, output a level signal as the unlocking signal through an input/output I/O interface.

5. The device according to claim 4, wherein the central processing unit further comprises a state detection unit (344), configured to detect whether the central processing unit works normally, so as to determine whether the level signal is correct.

6. The device according to claim 4, wherein the state detection unit comprises a first I/O interface and a second I/O interface, the first I/O interface is configured to output a high level, and the second I/O interface is configured to detect whether the first I/O interface outputs the high level, and if yes, the central processing unit works normally; or, the first I/O interface is configured to output a low level, and the second I/O interface is configured to detect whether the first I/O interface outputs the low level, and if yes, the central processing unit works normally.

7. An over-current protection method for a lithium battery, comprising:
performing (S601) bi-directional detection on a charging/discharging current of the lithium battery, so as to obtain a detection signal; and
completing (S602) determination of charging/discharging over-current of the lithium battery according to the detection signal, and outputting a charging/discharging over-current signal
receiving (S501) the charging/discharging over-current signal of a lithium battery;
locking (s502) an over-current state of the lithium battery according to the charging/discharging over-current signal of the lithium battery, so as to continuously indicate that the lithium battery is in the over-current state until an unlocking signal is received;
outputting (S503) a drive signal to cut off a main circuit where the lithium battery is located, wherein at the same time of the outputting the drive signal to cut off the main circuit where the lithium battery is located, the method further comprises:
outputting (S603), to a central processing unit, an identification signal that represents whether an over-current locked state has been entered; and
the method further comprises: determining (S604) whether an unlocking signal sent by the central processing unit is received, if the unlocking signal sent by the central processing unit is received, unlocking (S605) the over-current state according to the unlocking signal and outputting the drive signal to start the main circuit; and if the unlocking signal sent by the central processing unit is not received, continuously keeping outputting the drive signal for cutting off the main circuit and the identification signal.

8. The method according to claim 7, wherein the completing determination of charging/discharging over-current of the lithium battery according to the detection signal, and outputting the charging/discharging over-current signal comprises:
comparing, through a comparator, the detection signal with a reference voltage signal that represents charging/discharging over-current, so as to output the charging/discharging over-current signal to a locking unit.

9. The method according to claim 7, wherein the sending the unlocking signal by the central processing unit comprises:
determining, by detecting a voltage, temperature, and a current of each cell, whether a lithium battery group is available;
determining, by detecting a bus-bar voltage, whether the over-current state disappears; and
when the over-current state disappears and the battery group is available, outputting a level signal as the unlocking signal through an input/output I/O interface.

10. The method according to claim 9, further comprising:
detecting, by the central processing unit, whether the central processing unit works normally, so as to determine whether the output level signal is correct.

11. The method according to claim 10, wherein the detecting, by the central processing unit, whether the central processing unit works normally comprises: outputting a high level by using a first I/O interface, and detecting, by using a second I/O interface, whether the first I/O interface outputs the high level, and if yes, the central processing unit works normally; or, outputting a low level by using a first I/O interface, and detecting, by using a second I/O interface, whether the first I/O interface outputs the low level, and if yes, the central processing unit works normally.

## Patentansprüche

1. Überstromschutzvorrichtung für eine Lithiumbatterie, umfassend:
eine Erkennungseinheit (350), die konfiguriert ist, eine bidirektionale Erkennung eines ladenden/entladenden Stroms einer Lithiumbatterie auszuführen, um ein Erkennungssignal zu erhalten; und
eine Ermittlungseinheit (360), die konfiguriert ist, eine Ermittlung eines ladenden/entladenden Überstroms der Lithiumbatterie gemäß dem Erkennungssignal abzuschließen und ein Signal des ladenden/entladenden Überstroms an eine Sperreinheit auszugeben; wobei
die Sperreinheit (110) konfiguriert ist, einen Überstromzustand einer Lithiumbatterie gemäß einem Signal des ladenden/entladenden Überstroms der Lithiumbatterie zu sperren, sodass kontinuierlich angezeigt wird, dass die Lithiumbatterie in dem Überstromzustand ist, bis ein Freigabesignal empfangen wird; und
eine Schaltkreisunterbrechungseinheit (120), die konfiguriert ist, nachdem die Sperreinheit den Überstromzustand der Lithiumbatterie sperrt, ein Steuersignal auszugeben, um einen Hauptschaltkreis zu unterbrechen, in dem die Lithiumbatterie angebracht ist;
eine zentrale Verarbeitungseinheit (240), die konfiguriert ist, zu ermitteln, ob es erforderlich ist, die Sperreinheit in dem gesperrten Überstromzustand freizugeben, und wenn ein Freigeben erforderlich ist, ein Freigabesignal an die Sperreinheit auszugeben, sodass die Sperreinheit den gesperrten Überstromzustand freigibt und ein Steuersignal ausgibt, um den Hauptschaltkreis zu starten; und
eine Identifikationssignalausgabeeinheit (230), die konfiguriert ist, an eine zentrale Verarbeitungseinheit ein Identifikationssignal auszugeben, das anzeigt, ob die Sperreinheit in einen gesperrten Überstromzustand eingetreten ist.

2. Vorrichtung nach Anspruch 1, die außerdem eine Wandlereinheit (370) umfasst, wobei die Wandlereinheit in Reihe geschaltet ist mit einer negativen Klemme des Hauptschaltkreises und konfiguriert ist, ein Stromsignal in ein Spannungssignal zu wandeln, und wobei die Erkennungseinheit konfiguriert ist, das Spannungssignal zu empfangen und das Spannungssignal mithilfe eines Operationsverstärkers so zu verstärken, dass das Erkennungssignal erhalten wird.

3. Vorrichtung nach Anspruch 1, wobei die Ermittlungseinheit (360) insbesondere konfiguriert ist, das Erkennungssignal mithilfe einer Vergleichseinrichtung mit einem Bezugsspannungssignal zu vergleichen, das einen ladenden/entladenden Überstrom darstellt, sodass das Signal des ladenden/entladenden Überstroms an die Sperreinheit ausgegeben wird.

4. Vorrichtung nach Anspruch 1, wobei die zentrale Verarbeitungseinheit umfasst:
eine erste Ermittlungseinheit (341), die konfiguriert ist, durch ein Erkennen einer Spannung, einer Temperatur und eines Stroms von jeder Zelle zu ermitteln, ob eine Lithiumbatteriegruppe zur Verfügung steht;
eine zweite Ermittlungseinheit (342), die konfiguriert ist, durch ein Erkennen einer Sammelschienenspannung zu ermitteln, ob der Überstromzustand verschwindet; und
eine Ausgabeeinheit (343), die konfiguriert ist, wenn die zweite Ermittlungseinheit ermittelt, dass der Überstromzustand verschwindet und wenn die erste Ermittlungseinheit ermittelt, dass die Batteriegruppe zur Verfügung steht, ein Pegelsignal als das Freigabesignal über eine Eingabe/Ausgabe-E/A-Schnittstelle auszugeben.

5. Vorrichtung nach Anspruch 4, wobei die zentrale Verarbeitungseinheit außerdem eine Zustandserkennungseinheit (344) umfasst, die konfiguriert ist, zu erkennen, ob die zentrale Verarbeitungseinheit normal arbeitet, um zu ermitteln, ob das Pegelsignal korrekt ist.

6. Vorrichtung nach Anspruch 4, wobei die Zustandserkennungseinheit eine erste E/A-Schnittstelle und eine zweite E/A-Schnittstelle umfasst, wobei die erste E/A-Schnittstelle konfiguriert ist, einen hohen Pegel auszugeben, und wobei die zweite E/A-Schnittstelle konfiguriert ist, zu erkennen, ob die erste E/A-Schnittstelle den hohen Pegel ausgibt, und, falls ja, ob die zentrale Verarbeitungseinheit normal arbeitet; oder wobei die erste E/A-Schnittstelle konfiguriert ist, einen niedrigen Pegel auszugeben, und wobei die zweite E/A-Schnittstelle konfiguriert ist, zu erkennen, ob die erste E/A-Schnittstelle den niedrigen Pegel ausgibt und, falls ja, ob die zentrale Verarbeitungseinheit normal arbeitet.

7. Überstromschutzverfahren für eine Lithiumbatterie, umfassend:
Ausführen (S601) einer bidirektionalen Erkennung eines ladenden/entladenden Stroms der Lithiumbatterie, um ein Erkennungssignal zu erhalten; und
Abschließen (S602) einer Ermittlung eines ladenden/entladenden Überstroms der Lithiumbatterie gemäß dem Erkennungssignal und Ausgeben eines Signals des ladenden/entladenden Überstroms;
Empfangen (S501) des Signals des ladenden/entladenden Überstroms einer Lithiumbatterie;
Sperren (S502) eines Überstromzustands der Lithiumbatterie gemäß dem Signal des ladenden/entladenden Überstroms der Lithiumbatterie, sodass kontinuierlich angezeigt wird, dass die Lithiumbatterie in dem Überstromzustand ist, bis ein Freigabesignal empfangen wird;
Ausgeben (S503) eines Steuersignals, um einen Hauptschaltkreis zu unterbrechen, in dem sich die Lithiumbatterie befindet, wobei das Verfahren gleichzeitig mit dem Ausgeben des Steuersignals, um den Hauptschaltkreis zu unterbrechen, in dem sich die Lithiumbatterie befindet, außerdem umfasst:
Ausgeben (S603) eines Identifikationssignals, das darstellt, ob in einen gesperrten Überstromzustand eingetreten wurde, an eine zentrale Verarbeitungseinheit; und
wobei das Verfahren außerdem umfasst: Ermitteln (S604), ob ein von der zentralen Verarbeitungseinheit gesendetes Freigabesignal empfangen wird, wenn das von der zentralen Verarbeitungseinheit gesendete Freigabesignal empfangen wird, Freigeben (S605) des Überstromzustands gemäß dem Freigabesignal und Ausgeben des Steuersignals, um den Hauptschaltkreis zu starten; und wenn das von der zentralen Verarbeitungseinheit gesendete Freigabesignal nicht empfangen wird, kontinuierliches Fortsetzen des Ausgebens des Steuersignals für das Unterbrechen des Hauptschaltkreises und des Identifikationssignals.

8. Verfahren nach Anspruch 7, wobei das Abschließen der Ermittlung eines ladenden/entladenden Überstroms der Lithiumbatterie gemäß dem Erkennungssignal und das Ausgeben des Signals eines ladenden/entladenden Überstroms umfasst:
Vergleichen des Erkennungssignals durch eine Vergleichseinrichtung mit einem Bezugsspannungssignal, das einen ladenden/entladenden Überstrom darstellt, sodass das Signal des ladenden/entladenden Überstroms an eine Sperreinheit ausgegeben wird.

9. Verfahren nach Anspruch 7, wobei das Senden des Freigabesignals durch die zentrale Verarbeitungseinheit umfasst:
Ermitteln durch ein Erkennen einer Spannung, einer Temperatur und eines Stroms von jeder Zelle, ob eine Lithiumbatteriegruppe zur Verfügung steht;
Ermitteln durch ein Erkennen einer Sammelschienenspannung, ob der Überstromzustand verschwindet; und
wenn der Überstromzustand verschwindet und die Batteriegruppe zur Verfügung steht, Ausgeben eines Pegelsignals als das Freigabesignal über eine Eingabe/Ausgabe-E/A-Schnittstelle.

10. Verfahren nach Anspruch 9, das außerdem umfasst:
Erkennen durch die zentrale Verarbeitungseinheit, ob die zentrale Verarbeitungseinheit normal arbeitet, sodass ermittelt wird, ob das ausgegebene Pegelsignal korrekt ist.

11. Verfahren nach Anspruch 10, wobei das Erkennen durch die zentrale Verarbeitungseinheit, ob die zentrale Verarbeitungseinheit normal arbeitet, umfasst: Ausgeben eines hohen Pegels mithilfe einer ersten E/A-Schnittstelle, und Erkennen mithilfe einer zweiten E/A-Schnittstelle, ob die erste E/A-Schnittstelle den hohen Pegel ausgibt, und, falls ja, ob die zentrale Verarbeitungseinheit normal arbeitet; oder Ausgeben eines niedrigen Pegels mithilfe einer ersten E/A-Schnittstelle und Erkennen mithilfe einer zweiten E/A-Schnittstelle, ob die erste E/A-Schnittstelle den niedrigen Pegel ausgibt und, falls ja, ob die zentrale Verarbeitungseinheit normal arbeitet.

## Revendications

1. Dispositif de protection contre une surintensité pour une batterie au lithium, comprenant :
une unité de détection (350), configurée pour exécuter une détection bidirectionnelle sur un courant de charge/décharge de la batterie au lithium, afin d'obtenir un signal de détection ; et
une unité de détermination (360), configurée pour accomplir une détermination d'une surintensité de charge/décharge de la batterie au lithium conformément au signal de détection, et délivrer en sortie le signal de surintensité de charge/décharge à une unité de verrouillage ; où
l'unité de verrouillage (110) est configurée pour verrouiller un état de surintensité d'une batterie au lithium conformément à un signal de surintensité de charge/décharge de la batterie au lithium, afin d'indiquer en continu que la batterie au lithium se trouve dans l'état de surintensité jusqu'à ce qu'un signal de déverrouillage soit reçu ; et
une unité de coupure de circuit (120), configurée pour, après que l'unité de verrouillage a verrouillé l'état de surintensité de la batterie au lithium, délivrer en sortie un signal de commande pour couper un circuit principal où la batterie au lithium est située ;
une unité de traitement centrale (240), configurée pour déterminer si l'unité de verrouillage dans l'état de surintensité verrouillé nécessite d'être déverrouillée, et si un déverrouillage est nécessaire, délivrer en sortie un signal de déverrouillage à l'unité de verrouillage, de manière à ce que l'unité de verrouillage déverrouille l'état de surintensité verrouillé et délivre en sortie un signal de commande pour démarrer le circuit principal ; et
une unité de délivrance en sortie d'un signal d'identification (230), configurée pour délivrer en sortie, à une unité de traitement centrale, un signal d'identification qui indique si l'unité de verrouillage est entrée dans un état de surintensité verrouillé.

2. Dispositif selon la revendication 1, comprenant en outre une unité de conversion (370), où l'unité de conversion est connectée en série à une borne négative du circuit principal, et est configurée pour convertir un signal de courant en un signal de tension, et l'unité de détection est configurée pour recevoir le signal de tension et amplifier le signal de tension par l'intermédiaire d'un amplificateur opérationnel, afin d'obtenir le signal de détection.

3. Dispositif selon la revendication 1, dans lequel l'unité de détermination (360) est spécifiquement configurée pour comparer, par l'intermédiaire d'un comparateur, le signal de détection à un signal de tension de référence qui représente une surintensité de charge/décharge, afin de délivrer en sortie le signal de surintensité de charge/décharge à l'unité de verrouillage.

4. Dispositif selon la revendication 1, dans lequel l'unité de traitement centrale comprend :
une première unité de détermination (341), configurée pour déterminer, en détectant une tension, une température, et un courant de chaque cellule, si un groupe de batteries au lithium est disponible ;
une seconde unité de détermination (342), configurée pour déterminer, en détectant une tension de barre omnibus, si l'état de surintensité disparaît ; et
une unité de délivrance en sortie (343), configurée pour : lorsque la seconde unité de détermination détermine que l'état de surintensité disparaît et que la première unité de détermination détermine que le groupe de batteries est disponible, délivrer en sortie un signal de niveau comme signal de déverrouillage par l'intermédiaire d'une interface entrée/sortie, I/O.

5. Dispositif selon la revendication 4, dans lequel l'unité de traitement centrale comprend en outre une unité de détection d'état (344), configurée pour détecter si l'unité de traitement centrale fonctionne normalement, afin de déterminer si le signal de niveau est correct.

6. Dispositif selon la revendication 4, dans lequel l'unité de détection d'état comprend une première interface I/O et une seconde interface I/O, la première interface I/O est configurée pour délivrer en sortie un niveau élevé, et la seconde interface I/O est configurée pour détecter si la première interface I/O délivre en sortie le niveau élevé, et dans l'affirmative, l'unité de traitement centrale fonctionne normalement ; ou, la première interface I/O est configurée pour délivrer en sortie un niveau bas, et la seconde interface I/O est configurée pour détecter si la première interface I/O délivre en sortie le niveau bas, et dans l'affirmative, l'unité de traitement centrale fonctionne normalement.

7. Procédé de protection contre une surintensité pour une batterie au lithium, comprenant :
exécuter (S601) une détection bidirectionnelle sur un courant de charge/décharge de la batterie au lithium, afin d'obtenir un signal de détection ; et
accomplir (S602) une détermination de surintensité de charge/décharge de la batterie au lithium conformément au signal de détection, et délivrer en sortie un signal de surintensité de charge/décharge,
recevoir (S501) le signal de surintensité de charge/décharge d'une batterie au lithium ;
verrouiller (S502) un état de surintensité de la batterie au lithium conformément au signal de surintensité de charge/décharge de la batterie au lithium, afin d'indiquer en continu que la batterie au lithium se trouve dans l'état de surintensité jusqu'à ce qu'un signal de déverrouillage soit reçu ;
délivrer en sortie (S503) un signal de commande pour couper un circuit principal où la batterie au lithium est située, où au même moment que la délivrance en sortie du signal de commande pour couper le circuit principal où la batterie au lithium est située, le procédé comprend en outre :
délivrer en sortie (S603), à une unité de traitement centrale, un signal d'identification qui indique si l'on se trouve dans un état de surintensité verrouillé ; et
le procédé comprend en outre : déterminer (S604) si un signal de déverrouillage envoyé par l'unité de traitement centrale a été reçu, si le signal de déverrouillage envoyé par l'unité de traitement centrale a été reçu, déverrouiller (S605) l'état de surintensité conformément au signal de déverrouillage et délivrer en sortie le signal de commande pour démarrer le circuit principal ; et si le signal de déverrouillage envoyé par l'unité de traitement centrale n'a pas été reçu, continuer à délivrer en sortie de manière continue le signal de commande pour couper le circuit principal et le signal d'identification.

8. Procédé selon la revendication 7, dans lequel l'accomplissement de la détermination de surintensité de charge/décharge de la batterie au lithium conformément au signal de détection, et la délivrance en sortie du signal de surintensité de charge/décharge comprennent :
comparer, par l'intermédiaire d'un comparateur, le signal de détection avec un signal de tension de référence qui représente une surintensité de charge/décharge, afin de délivrer en sortie le signal de surintensité de charge/décharge à une unité de verrouillage.

9. Procédé selon la revendication 7, dans lequel l'envoi du signal de déverrouillage par l'unité de traitement centrale comprend :
déterminer, en détectant une tension, une température, et un courant de chaque cellule, si un groupe de batteries au lithium est disponible ;
déterminer, en détectant une tension de barre omnibus, si l'état de surintensité disparaît ; et
lorsque l'état de surintensité disparaît et que le groupe de batteries est disponible,
délivrer en sortie un signal de niveau comme signal de déverrouillage par l'intermédiaire d'une interface entrée/sortie, I/O.

10. Procédé selon la revendication 9, comprenant en outre l'étape suivante :
détecter, par l'unité de traitement centrale, si l'unité de traitement centrale fonctionne normalement, afin de déterminer si le signal de niveau de sortie est correct.

11. Procédé selon la revendication 10, dans lequel la détection, par l'unité de traitement centrale, du fait que l'unité de traitement centrale fonctionne normalement, ou non, comprend : délivrer en sortie un niveau élevé au moyen d'une premier interface I/O, et détecter, au moyen d'une seconde interface I/O, si la première interface I/O délivre en sortie le niveau élevé, et dans l'affirmative, l'unité de traitement centrale fonctionne normalement ; ou, délivrer en sortie un niveau bas au moyen d'une première interface I/O, et détecter, au moyen d'une seconde interface I/O, si la première interface I/O délivre en sortie le niveau bas, et dans l'affirmative, l'unité de traitement centrale fonctionne normalement.
